# EUROPÄISCHE PATENTANMELDUNG

(11) **EP 4 130 521 A1**
(43) Veröffentlichungstag der Anmeldung: **08.02.2023**
(21) Anmeldenummer: 22188029.7
(22) Anmeldetag: 01.08.2022
(51) Int. Cl.: F16J 15/3212, F16J 15/3216, F16J 15/322, F16J 15/3232, F16J 15/3256, F16J 15/3268, F16J 15/3264

(54) **DICHTRING**

(30) Priorität: 04.08.2021 DE 102021120283
(71) Anmelder: Carl Freudenberg KG, 69469 Weinheim (DE)
(72) Erfinder: Prem, Erich, 69502 Hemsbach (DE); Kohl, Benjamin, 69231 Rauenberg (DE); Frölich, Dr. Daniel, 69469 Weinheim (DE)

(57) **Zusammenfassung**

Dichtring, umfassend einen Dichtkörper (1) aus einem gummielastischen Dichtungswerkstoff und ein Vorschaltelement (2), das mit dem Dichtkörper (1) verbunden ist. Der Dichtkörper (1) umfasst einen Haltebund (3), der einen Hinterschnitt (4) begrenzt, wobei das Vorschaltelement (2) im Hinterschnitt (4) angeordnet und dem Haltebund (3) ungehaftet und zerstörungsfrei lösbar zugeordnet ist.

## Beschreibung

### Technisches Gebiet

Die Erfindung betrifft einen Dichtring, umfassend einen Dichtkörper aus einem gummielastischen Dichtungswerkstoff und ein Vorschaltelement, das mit dem Dichtkörper verbunden ist.

### Stand der Technik

Ein solcher Dichtring ist allgemein bekannt. Das Vorschaltelement kann zum Beispiel durch eine Vliesstoff-Scheibe, eine PTFE-Scheibe oder ein Prallblech gebildet sein, je nach Anwendungsfall.

Der Dichtkörper und das Vorschaltelement sind zum Beispiel miteinander verklebt oder ansonsten stoffschlüssig verbunden.

In wirtschaftlicher Hinsicht, im Hinblick auf eine möglichst vielfältige Kombination von Dichtkörpern und Vorschaltelementen miteinander und hinsichtlich einer guten Umweltverträglichkeit ist eine solche Verbindung wenig zufriedenstellend.

### Darstellung der Erfindung

Der Erfindung liegt die Aufgabe zu Grunde, einen Dichtring der eingangs genannten Art derart weiterzuentwickeln, dass er einen modularen Aufbau aufweist, sodass für den jeweiligen Anwendungsfall jeweils angepasste Dichtkörper und Vorschaltelemente vielfältig miteinander kombinierbar sind und dass ein solcher Dichtring einfach und kostengünstig herstellbar ist und im Anschluss an seine Verwendung umweltschonend und sortenrein recyclebar ist.

Eine solche Aufgabe wird durch einen Dichtring gemäß Anspruch 1 gelöst. Auf vorteilhafte Ausgestaltungen nehmen die auf Anspruch 1 direkt oder indirekt rückbezogenen Ansprüche Bezug.

Zur Lösung der Aufgabe ist es vorgesehen, dass der Dichtkörper einen Haltebund umfasst, der einen Hinterschnitt begrenzt und dass das Vorschaltelement im Hinterschnitt angeordnet und dem Haltebund ungehaftet und zerstörungsfrei lösbar zugeordnet ist.

Hierbei ist von Vorteil, dass der Dichtring modular aufgebaut ist, sodass dadurch bedarfsweise unterschiedliche Vorschaltelemente und unterschiedliche Dichtkörper einfach miteinander kombinierbar sind.

Die Verbindung von Dichtkörper und Vorschaltelement ist einfach und kostengünstig. Dichtkörper und Vorschaltelement sind durch eine Steckverbindung miteinander verbunden. Eine stoffschlüssige Verbindung gelangt nicht zur Anwendung.

Zur Montage des Dichtrings wird das Vorschaltelement in den Hinterschnitt gesteckt und durch den Haltebund ungehaftet und zerstörungsfrei lösbar im Hinterschnitt gehalten.

Soll, zum Beispiel in einem Servicefall, ein bis dahin benutztes Vorschaltelement durch ein neues oder anderes Vorschaltelement ersetzt werden, wird das bis dahin benutzte Vorschaltelement unter elastischer Verformung des gummielastischen Haltebunds aus dem Hinterschnitt entfernt. Anschließend wird das neue Vorschaltelement, ebenfalls unter elastischer Verformung des gummielastischen Haltebunds, in den Hinterschnitt montiert.

Der Dichtkörper und das Vorschaltelement sind durch die Steckverbindung formschlüssig miteinander verbunden. Dadurch, dass der Dichtkörper und das Vorschaltelement ungehaftet und zerstörungsfrei lösbar miteinander verbunden sind, können die Einzelteile, aus denen der Dichtring besteht, im Anschluss an die bestimmungsgemäße Verwendung einfach voneinander getrennt und dann sortenrein recycelt werden.

Das Vorschaltelement und der Haltebund können auf der einem abzudichtenden Medium axial abgewandten Stirnseite des Dichtkörpers angeordnet sein. Die Dichtlippen des Dichtkörpers werden in einem solchen Fall von dem Vorschaltelement vor einer Beaufschlagung mit Verunreinigungen aus der Umgebung geschützt.

Generell besteht jedoch auch die Möglichkeit, dass das Vorschaltelement und der Haltebund auf der einem abzudichtenden Medium axial zugewandten Stirnseite des Dichtkörpers angeordnet sind. In einem solchen Fall kann das Vorschaltelement zum Beispiel durch ein Prallblech gebildet sein, das abzudichtendes Medium nur in reduziertem Maß zu einer Hauptdichtlippe des Dichtkörpers vordringen lässt.

Der Haltebund ist bevorzugt kreisringförmig in sich geschlossen ausgebildet. Eine solche Ausgestaltung hat den Vorteil, dass das Vorschaltelement während der gesamten Gebrauchsdauer des Dichtrings besonders zuverlässig im Hinterschnitt gehalten wird.

Davon abweichend besteht die Möglichkeit, dass der Haltebund durch kreisringförmig ausgebildete Segmente gebildet ist, die einander, in Umfangsrichtung betrachtet, mit Abstand benachbart zugeordnet sind. Bei einer solchen Ausgestaltung ist von Vorteil, dass die Montage/ Demontage des Vorschaltelements in/ aus dem Hinterschnitt besonders einfach erfolgen kann.

Ein guter Kompromiss aus einer einfachen Montage/ Demontage des Vorschaltelements in/ aus dem Hinterschnitt und einer dauerhaft zuverlässigen Anordnung des Vorschaltelements im Hinterschnitt ist gegeben, wenn der Haltebund in radialer Richtung eine Höhe aufweist und eine Dicke in axialer Richtung, die im Wesentlichen der axialen Weite des Hinterschnitts und damit der axialen Breite des Vorschaltelements entspricht.

Die Höhe entspricht bevorzugt der radialen Tiefe des Hinterschnitts, wobei das Verhältnis aus Höhe zu Dicke des Haltebunds bevorzugt 1,5 bis 2,5 beträgt. Der Haltebund ist dadurch einerseits ausreichend elastisch nachgiebig, um das Vorschaltelement einfach in den Hinterschnitt montieren/ aus dem Hinterschnitt demontieren zu können und andererseits steif genug, das Vorschaltelement während einer langen Gebrauchsdauer des Dichtrings zuverlässig mit dem Dichtkörper zu verbinden.

Wie zuvor bereits ausgeführt, können durch die Steckverbindung zwischen Dichtkörper und Vorschaltelement praktisch beliebige Vorschaltelemente modular mit dem Dichtkörper verbunden werden. Das Vorschaltelement kann zum Beispiel durch eine Scheibe aus einem Vliesstoff oder aus PTFE gebildet sein, oder durch ein Prallblech.

In Abhängigkeit von den jeweiligen Gegebenheiten des Anwendungsfalls kann zum Beispiel ein und derselbe Dichtkörper mit dem an den Anwendungsfall angepassten Vorschaltelement einfach kombiniert werden.

Ein solcher Dichtring kann im Maschinenbau, insbesondere in der Kraftfahrzeugtechnik, vielseitig verwendet werden, beispielsweise im Antriebsstrang, im Bereich des Getriebeausgangs, zur Motorabdichtung oder zur Achsabdichtung oder in Maschinen der Lebensmittelindustrie, also überall dort, wo die Dichtlippen des Dichtkörpers durch das Vorschaltelement vor unerwünschten Einflüssen geschützt werden sollen.

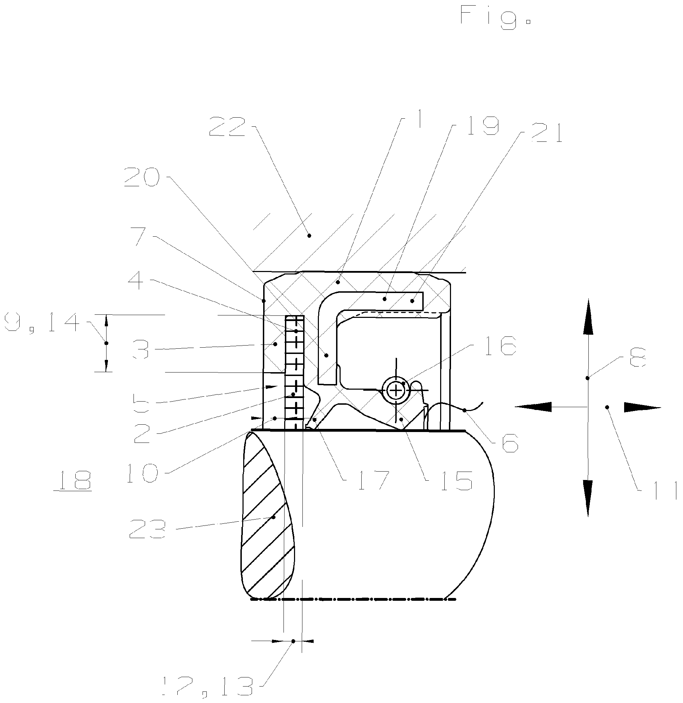

### Kurzbeschreibung der Zeichnung

Ein Ausführungsbeispiel des erfindungsgemäßen Dichtrings wird nachfolgend anhand der Figur näher erläutert.

In der Figur ist ein erfindungsgemäßer Dichtring in schematischer Darstellung gezeigt.

### Ausführung der Erfindung

Der Dichtring ist als Radialwellendichtring ausgebildet und in einer Dichtungsanordnung montiert dargestellt. Der Dichtring umfasst radial innenseitig auf der dem abzudichtenden Medium 6 axial zugewandten Seite eine Dichtlippe 15, die radial innen durch einander durchschneidende Kegelflächen begrenzt ist und radial außenumfangsseitig eine Ringwendelfeder 16 aufnimmt.

Auf der dem abzudichtenden Medium 6 axial abgewandten Seite der Dichtlippe 15 ist eine Staublippe 17 vorgesehen, als Schutz der Dichtlippe 15 vor einer Beaufschlagung mit Verunreinigungen aus der Umgebung 18.

Außerdem umfasst der Dichtring einen im Dichtkörper 1 angeordneten, L-förmigen Stützring 19 aus einem zähharten Werkstoff, mit einem Radialschenkel 20 und einem Axialschenkel 21.

Radial innenseitig am Radialschenkel 20 sind die Dichtlippe 15 und die Staublippe 17 angelenkt. Der Axialschenkel 21 ist außenumfangsseitig vom elastomeren Werkstoff des Dichtkörpers 1 umschlossen. Durch den Axialschenkel 21 wird der Dichtring in einer Bohrung eines Gehäuses 22 gehalten.

Die Dichtlippe 15 umschließt eine abzudichtende Welle 23 unter radialer Vorspannung dichtend.

Auf der dem abzudichtenden Medium 6 axial abgewandten Stirnseite 7 des Dichtkörpers 1 ist der Haltebund 3 angeordnet, der den Hinterschnitt 4 begrenzt.

Im Hinterschnitt 4 ist das Vorschaltelement 2, das in dem hier gezeigten Ausführungsbeispiel scheibenförmig ausgebildet ist, ungehaftet und zerstörungsfrei lösbar angeordnet. Diese ungehaftete und zerstörungsfrei lösbare Zuordnung wird durch eine formschlüssig wirksame Steckverbindung 5 bewirkt.

Um eine einfache Montage/ Demontage des Vorschaltelements 2 aus dem Hinterschnitt 4 zu erreichen, hat der gummielastische Haltebund 3 in radialer Richtung 8 eine Höhe 9 und eine Dicke 10 in axialer Richtung 11, die im Wesentlichen der axialen Weite 12 des Hinterschnitts 4 entspricht. Die axiale Weite 12 des Hinterschnitts 4 entspricht praktisch der axialen Breite 13 des Vorschaltelements 2.

Der Haltebund 3 bildet einen einstückigen und materialeinheitlichen Bestandteil des Dichtkörpers 1 und besteht deshalb auch aus einem gummielastischen Dichtungswerkstoff.

Die Höhe 9 entspricht der radialen Tiefe 14 des Hinterschnitts 4, wobei das Verhältnis von Höhe 9 zu Dicke 10 des Haltebunds 3 im hier gezeigten Ausführungsbeispiel etwa 2 beträgt. Dadurch kann das Vorschaltelement 2 einfach in den Hinterschnitt 4 montiert/ einfach aus dem Hinterschnitt 4 demontiert werden, und der Formschluss der Steckverbindung 5 hält zuverlässig während der gesamten Gebrauchsdauer des Dichtrings.

## Patentansprüche

1. Dichtring, umfassend einen Dichtkörper (1) aus einem gummielastischen Dichtungswerkstoff und ein Vorschaltelement (2), das mit dem Dichtkörper (1) verbunden ist, **dadurch gekennzeichnet, dass** der Dichtkörper (1) einen Haltebund (3) umfasst, der einen Hinterschnitt (4) begrenzt und dass das Vorschaltelement (2) im Hinterschnitt (4) angeordnet und dem Haltebund (3) ungehaftet und zerstörungsfrei lösbar zugeordnet ist.

2. Dichtring nach Anspruch 1, **dadurch gekennzeichnet, dass** der Dichtkörper (1) und das Vorschaltelement (2) durch eine Steckverbindung (5) formschlüssig miteinander verbunden sind.

3. Dichtring nach einem der Ansprüche 1 oder 2, **dadurch gekennzeichnet, dass** das Vorschaltelement (2) und der Haltebund (3) auf der einem abzudichtenden Medium (6) axial abgewandten Stirnseite (7) des Dichtkörpers (1) angeordnet sind.

4. Dichtring nach einem der Ansprüche 1 bis 3, **dadurch gekennzeichnet, dass** der Haltebund (3) kreisringförmig in sich geschlossen ausgebildet ist.

5. Dichtring nach einem der Ansprüche 1 bis 4, **dadurch gekennzeichnet, dass** der Haltebund (3) in radialer Richtung (8) eine Höhe (9) aufweist und eine Dicke (10) in axialer Richtung (11), die im Wesentlichen der axialen Weite (12) des Hinterschnitts (4) und damit der axialen Breite (13) des Vorschaltelements (2) entspricht.

6. Dichtring nach Anspruch 5, **dadurch gekennzeichnet, dass** die Höhe (8) der radialen Tiefe (14) des Hinterschnitts (4) entspricht und dass das Verhältnis von Höhe (9) zu Dicke (10) des Haltebunds (3) 1,5 bis 2,5 beträgt.

7. Dichtring nach einem der Ansprüche 1 bis 6, **dadurch gekennzeichnet, dass** das Vorschaltelement (2) durch eine Scheibe aus einem Vliesstoff oder aus PTFE oder durch ein Prallblech gebildet ist.
